(19) Europäisches Patentamt / European Patent Office / Office européen des brevets

(11) **EP 4 572 452 A1**

(12) **EUROPEAN PATENT APPLICATION**
published in accordance with Art. 153(4) EPC

(43) Date of publication:
**18.06.2025 Bulletin 2025/25**

(21) Application number: **23852026.6**

(22) Date of filing: **14.08.2023**

(51) International Patent Classification (IPC):
**H04W 72/02** (2009.01)

(52) Cooperative Patent Classification (CPC):
**H04L 5/00; H04W 24/10; H04W 72/02**

(86) International application number:
**PCT/CN2023/112908**

(87) International publication number:
**WO 2024/032807 (15.02.2024 Gazette 2024/07)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **12.08.2022 CN 202210971968**

(71) Applicant: **Datang Mobile Communications Equipment Co., Ltd.**
**Beijing 100085 (CN)**

(72) Inventors:
- **LU, Yiwen**
  **Beijing 100085 (CN)**
- **GAO, Qiubin**
  **Beijing 100085 (CN)**

(74) Representative: **Studio Torta S.p.A.**
**Via Viotti, 9**
**10121 Torino (IT)**

(54) **INFORMATION TRANSMISSION METHOD, APPARATUS, TERMINAL AND NETWORK SIDE DEVICE**

(57) The present disclosure provides an information transmission method, an apparatus, a terminal, and a network side device. The information transmission method of the present disclosure comprises: receiving TRS resource configuration information and TRS report configuration information from a network side device; and receiving and measuring on a TRS to obtain a TRS measurement result, the TRS being received based on the TRS resource configuration information; according to the TRS measurement result and the TRS report configuration information, determining the corresponding relationship between delay information and Doppler information; and, according to the determined corresponding relationship between the delay information and the Doppler information, sending channel state information (CSI) to the network side device, the CSI comprising the delay information and/or the Doppler information.

```
┌─────────────────────────────────────────────────────────┐
│ Receiving tracking reference signal (TRS) resource       │── 101
│ configuration information and TRS report configuration    │
│ information from a network side device                    │
└─────────────────────────────────────────────────────────┘
                          ↓
┌─────────────────────────────────────────────────────────┐
│ Receiving and measuring a TRS to obtain a TRS measurement │── 102
│ result, wherein the TRS is received based on the TRS      │
│ resource configuration information                        │
└─────────────────────────────────────────────────────────┘
                          ↓
┌─────────────────────────────────────────────────────────┐
│ Determining a correspondence between delay information    │── 103
│ and Doppler information according to the TRS measurement   │
│ result and the TRS report configuration information       │
└─────────────────────────────────────────────────────────┘
                          ↓
┌─────────────────────────────────────────────────────────┐
│ Sending channel state information (CSI) to the network    │── 104
│ side device according to the correspondence between the   │
│ delay information and the Doppler information, wherein the │
│ CSI comprises the delay information and/or the Doppler     │
│ information                                               │
└─────────────────────────────────────────────────────────┘
```

**FIG. 1**

EP 4 572 452 A1

**Description**

**CROSS-REFERENCE TO RELATED APPLICATION**

This application claims the priority of Chinese Patent Application No. 202210971968.3 entitled "Information Transmission Method, Apparatus, Terminal and Network Side Device" filed August 12, 2022, the disclosures of which are incorporated in their entirety by reference herein.

**TECHNICAL FIELD**

The present disclosure relates to the field of communications technologies, and in particular, to an information transmission method and apparatus, a network side device, and a terminal.

**BACKGROUND**

At present, in a New Radio (NR) system, the channel transmission performance of the terminal in a medium-high speed scenario is significantly attenuated because the base station cannot estimate the time-varying Doppler information or delay information of the current channel transmission through the channel state information (CSI) reported by the terminal. If the base station cannot predict an accurate channel change within a certain period of time according to the current CSI information, the pre-coding calculated by reporting the current CSI cannot match the real channel at each moment, so that the channel transmission performance is greatly reduced.

However, the real channel is composed of mixed small-scale information composed of a plurality of clusters and sub-paths, and based on the report overhead consideration, the terminal may not report the estimation value of the Doppler frequency offset of all the sub-paths based on the multipath channel. Therefore, at present, the base station cannot predict the multipath real channel.

**SUMMARY**

An objective of the present disclosure is to provide an information transmission method and apparatus, a terminal, and a network side device, to resolve a problem in the related art that a base station cannot predict a multipath real channel.

According to a first aspect, an information transmission method performed by a terminal is provided. The method includes:

receiving tracking reference signal (TRS) resource configuration information and TRS report configuration information from a network side device;
receiving and measuring a TRS to obtain a TRS measurement result, wherein the TRS is received based on the TRS resource configuration information;
determining a correspondence between delay information and Doppler information according to the TRS measurement result and the TRS report configuration information; and
sending channel state information (CSI) to the network side device according to the correspondence between the delay information and the Doppler information, wherein
the CSI includes the delay information and/or the Doppler information.

Optionally, the CSI includes K1 pieces of delay information and K1 pieces of Doppler information, wherein K1 is a positive integer greater than or equal to 1.

Optionally, the K1 pieces of delay information and the K1 pieces of Doppler information are in one-to-one correspondence according to an index value of a delay path.

Optionally, the CSI includes one piece of delay information and K2 pieces of Doppler information; or the CSI includes K2 pieces of Doppler information; or the CSI includes K2-1 pieces of delay information and K2 pieces of Doppler information, wherein K2 is a positive integer greater than 1.

Optionally, in a case that the CSI includes one piece of delay information, the piece of delay information corresponds to first Doppler information, the delay information and the first Doppler information correspond to the same delay path/cluster.

Optionally, in a case that the CSI includes the K2-1 pieces of delay information, the K2-1 pieces of delay information includes K2-1 delay difference offset values relative to a first delay path.

Optionally, the CSI includes K3 groups of Doppler information, and K3 is a positive integer greater than or equal to 1.

Optionally, a value of K3 is configured by the network side device by using higher layer signaling or in a predefined manner; or a value of K3 is determined by the TRS measurement result and a preset value A, wherein K3 is less than or equal to A, and a value of A is configured by the network side device by using higher layer signaling or a predefined manner.

Optionally, each group of the K3 groups of Doppler information includes one piece of delay information and Doppler frequency offset information of B1 delay paths; or each group of the K3 groups of Doppler information includes Doppler frequency offset information or Doppler difference offset values of B1 delay paths, and the CSI further includes delay information of a first delay path in the B1 delay paths included in the each group; or each group of the K3 groups of Doppler information includes Doppler frequency offset information or Doppler difference offset values of B1 delay paths, and the CSI further includes delay information of a first delay path in B1 delay paths included in a first group of the K3 groups of Doppler information and delay difference offset values of K3-1 groups of the K3 groups relative to a first delay path of the first group, and B1 is a positive integer greater than 1.

Optionally, each group of the K3 groups of Doppler information includes Doppler information of m delay paths, wherein m = X/K3, and X is a total quantity of Doppler information; or each group of the K3 groups of Doppler information includes Doppler information of N delay paths that meet a first condition, wherein a delay path that meets the first condition is a delay path that the absolute value of difference between a Doppler frequency offset of the delay path and a Doppler frequency offset of a first delay path in the group is less than or equal to a preset threshold.

Optionally, in a case that the CSI includes Y pieces of Doppler information and Y is a positive integer greater than or equal to 1, the Y pieces of Doppler information include Y Doppler values; or, when Y is greater than 1, the Y pieces of Doppler information include a Doppler value of a first delay path and difference offset values of Y-1 delay paths relative to the first delay path; when Y is equal to 1, the Doppler information is a Doppler value of a first delay path, a maximum Doppler value, or a weighted average value of Doppler values of Y delay paths.

Optionally, when Y is greater than 1, Doppler values of Y delay paths are sorted in an order from large to small, or delay absolute values of the Y delay paths are sorted in an order from large to small.

Optionally, the first delay path is a delay path with a maximum delay or maximum Doppler frequency offset.

According to the second aspect, an information transmission method performed by a network side device is provided, wherein the method includes: sending tracking reference signal TRS resource configuration information and TRS report configuration information to a terminal, wherein the TRS resource configuration information includes configuration information of a TRS, the TRS report configuration information is used to indicate report metrics in channel state information (CSI) reported by the terminal, and the report metrics include delay information and/or Doppler information; receiving CSI from the terminal, wherein the CSI is determined by the terminal according to a TRS measurement result and the TRS report configuration information, and the TRS measurement result is obtained by the terminal through receiving and measuring the TRS received according to the TRS resource configuration information.

Optionally, sending the tracking reference signal TRS resource configuration information and the TRS report configuration information to the terminal includes: sending the TRS resource configuration information and the TRS report configuration information to the terminal through higher layer signaling.

Optionally, the method further includes: parsing the CSI to obtain the delay information and/or the Doppler information.

Optionally, parsing the CSI to obtain the delay information and/or the Doppler information includes: taking each group including $\lceil \log_2(X) \rceil$ bits in first $K1 \times \lceil \log_2(X) \rceil$ bits in the CSI as one piece of delay information; taking each group including $\lceil \log_2(Y) \rceil$ bits in last $K1 \times \lceil \log_2(Y) \rceil$ bits in the CSI as one piece of Doppler information; wherein K1 is a positive integer greater than or equal to 1, X is a quantity of quantization steps for delay, and Y is a quantity of quantization steps for Doppler.

Optionally, the delay information has a correspondence with the Doppler information.

Optionally, first delay information is delay information of a first delay path.

Optionally, parsing the CSI to obtain the delay information and/or the Doppler information includes: taking first $\lceil \log_2(X) \rceil$ bits in the CSI as one piece of delay information, and taking each group including $\lceil \log_2(Y) \rceil$ bits in last $K2 \times \lceil \log_2(Y) \rceil$ bits as one piece of Doppler information; or taking each group including $\lceil \log_2(Y) \rceil$ bits in $K2 \times \lceil \log_2(Y) \rceil$ bits in the CSI as one piece of Doppler information; or taking each group including $\lceil \log_2(X) \rceil$

bits in first $(K2-1)\times\left\lceil \log_2(X)\right\rceil$ bits in the CSI as one piece of delay information, and taking each group including $\left\lceil \log_2(Y)\right\rceil$ bits in last $K2\times\left\lceil \log_2(Y)\right\rceil$ bits as one piece of Doppler information; wherein K2 is a positive integer greater than 1, X is a quantity of quantization steps for delay, and Y is a quantity of quantization steps for Doppler.

Optionally, in a case that the delay information is one piece of delay information, the delay information corresponds to a first piece of Doppler information in K2 pieces of Doppler information, or the delay information is delay information of a first delay path.

Optionally, the first piece of Doppler information in the K2 pieces of Doppler information is Doppler information corresponding to the first delay path.

Optionally, parsing the CSI to obtain the delay information and/or the Doppler information includes: taking each group including $\left\lceil \log_2(ZY)\right\rceil$ bits in $K3\times\left\lceil \log_2(ZY)\right\rceil$ bits in the CSI as one piece of Doppler information, wherein K3 is a positive integer greater than or equal to 1, Z is a quantity of delay paths in a Doppler group, and Y is a quantity of quantization steps for Doppler.

Optionally, the first delay path is a delay path with a maximum delay or a maximum Doppler frequency offset.

According to a third aspect, a terminal is provided. The terminal includes: a memory, a transceiver, a processor, wherein, the memory is configured to store a computer program; the transceiver is configured to send and receive data under the control of the processor; and the processor is configured to read the computer program in the memory and perform the following operations: receiving, through the transceiver, tracking reference signal (TRS) resource configuration information and TRS report configuration information from a network side device; receiving and measuring a TRS to obtain a TRS measurement result, wherein the TRS is received based on the TRS resource configuration information; determining a correspondence between delay information and Doppler information according to the TRS measurement result and the TRS report configuration information; and sending channel state information (CSI) to the network side device according to the correspondence between the delay information and the Doppler information, wherein the CSI includes the delay information and/or the Doppler information.

According to a fourth aspect, an information transmission apparatus is provided. The apparatus includes a first receiving unit, configured to receive tracking reference signal (TRS) resource configuration information and TRS report configuration information from a network side device; a measurement unit, configured to receive and measure a TRS to obtain a TRS measurement result, wherein the TRS is received based on the TRS resource configuration information; and a first processing unit, configured to determine a correspondence between delay information and Doppler information according to the TRS measurement result and the TRS report configuration information; and a first sending unit, configured to send channel state information (CSI) to the network side device according to the correspondence between the delay information and the Doppler information, wherein the CSI includes the delay information and/or the Doppler information.

According to a fifth aspect, a network-side device is provided. The network-side device includes a memory, a transceiver, a processor, wherein the memory is configured to store a computer program; the transceiver is configured to send and receive data under the control of the processor; and the processor is configured to read the computer program in the memory and perform the following operations: sending, through the transceiver, tracking reference signal TRS resource configuration information and TRS report configuration information to a terminal, wherein the TRS resource configuration information includes configuration information of a TRS, the TRS report configuration information is used to indicate report metrics in channel state information (CSI) reported by the terminal, and the report metrics include delay information and/or Doppler information; receiving CSI from the terminal through the transceiver, wherein the CSI is determined by the terminal according to a TRS measurement result and the TRS report configuration information, and the TRS measurement result is obtained by the terminal through receiving and measuring the TRS received according to the TRS resource configuration information.

According to a sixth aspect, an information transmission apparatus is provided. The apparatus includes: a second sending unit, configured to send tracking reference signal TRS resource configuration information and TRS report configuration information to a terminal, wherein the TRS resource configuration information includes configuration information of a TRS, the TRS report configuration information is used to indicate report metrics in channel state information (CSI) reported by the terminal, and the report metrics include delay information and/or Doppler information; a second receiving unit, configured to receiving CSI from the terminal, wherein the CSI is determined by the terminal according to a TRS measurement result and the TRS report configuration information, and the TRS measurement result is obtained by the terminal through receiving and measuring the TRS received according to the TRS resource configuration information.

According to a seventh aspect, a processor-readable storage medium is provided. The processor-readable storage medium stores a computer program, and the computer program is configured to cause a processor to perform the steps of the information transmission method according to the first aspect, or perform the steps of the information transmission method according to the second aspect.

The above technical solution of the present disclosure has at least the following beneficial effects:

In the foregoing technical solution of the embodiments of the present disclosure, first, the tracking reference signal TRS resource configuration information and the TRS report configuration information sent by the network side device are received; the TRS is then received and measured to obtain a TRS measurement result, wherein the TRS is received based on TRS resource configuration information; the correspondence between the delay information and the Doppler information is determined according to the TRS measurement result and the TRS report configuration information; according to the determined correspondence between the delay information and the Doppler information, information state information (CSI) is sent to the network side device, wherein the CSI includes delay information and/or Doppler information, so that the terminal can calculate the reported delay and/or Doppler information of the current multipath small-scale channel based on the TRS measurement result to match the channel measurement result of the base station side, and assist the base station to perform channel prediction and precoding calculation at the future moment with the smaller overhead, thereby greatly optimizing the transmission performance in the medium-high speed scenario.

## BRIEF DESCRIPTION OF THE DRAWINGS

FIG. 1 is a first schematic flowchart of an information transmission method according to an embodiment of the present disclosure;

FIG. 2 is a second schematic flowchart of an information transmission method according to an embodiment of the present disclosure;

FIG. 3 is a structural block diagram of a terminal according to an embodiment of the present disclosure;

FIG. 4 is a first schematic diagram of modules of an information transmission apparatus according to an embodiment of the present disclosure;

FIG. 5 is a structural block diagram of a network side device according to an embodiment of the present disclosure;

FIG. 6 is a second schematic diagram of modules of an information transmission apparatus according to an embodiment of the present disclosure.

## DETAILED DESCRIPTION

In the embodiments of the present disclosure, the term "and/or" describes an association relationship between associated objects, indicating that there may be three relationships, for example, A and/or B may indicate that A exists alone, A and B exist at the same time, and B exists alone. The character "/" generally indicates an "or" relationship between the associated objects.

In this embodiment of this application, the term "a plurality of" means two or more, and other quantifiers are similar to each other.

The following clearly and completely describes the technical solutions in the embodiments of this application with reference to the accompanying drawings in the embodiments of this application. All other embodiments obtained by a person of ordinary skill in the art based on the embodiments of this application without creative efforts shall fall within the protection scope of this application.

In a Rel-15 version or a Rel-16 version, an NR system uses a channel state information reference signal (CSI-RS) of a port to implement a function of a tracking reference signal (TRS), and the base station may configure a non-zero power CSI-RS (NZP CSI-RS) resource set, by using a radio resource control (RRC) parameter trs-Info, as a periodic or aperiodic TRS reference signal for time-frequency tracking for the terminal. Specifically, in the current protocol, the TRS is sent in the form of a burst TRS (TRS burst), and the N time domain symbols of one TRS burst may be specifically implemented by N CSI-RS resources configured in a resource set. For the FR1 frequency band, one resource set includes 2/4 channel measurement resources (CMR) corresponding to four symbols in one TRS burst, wherein time-frequency locations in the slots are the same, and a periodicity and a bandwidth are also completely the same. For the FR1 frequency band, one resource set includes two or four CMRs corresponding to time domain symbols in one/two slots of one TRS burst, time-frequency locations in the slots are the same, and a periodicity and a bandwidth are also completely the same.

In a medium-high speed scenario, a Doppler frequency offset may cause time-domain channels to have time-varying phase deflection at different times. Therefore, based on the time-domain multi-symbol characteristics of the TRS burst, the time-domain channel phase offset between the two symbols can be estimated through time-domain channel cross-correlation calculation on different symbols. The Doppler frequency offset $f_d$ may be specifically obtained by performing the following operations by using the phase offset θ: $f_d = \dfrac{\theta}{2\pi\tau}$, where $\tau$ is the time difference between the two symbols.

Currently, for the aperiodic TRS, the base station may configure the CSI reporting configuration for the user equipment (UE, also referred to as a terminal), but the report metrics in the reporting configuration is none; for the periodic TRS, the base station does not configure the CSI reporting configuration for the UE, so the UE does not report the CSI information to the base station for the TRS measurement.

In the Rel-17 version, a High Speed Transmission-Single Frequency Network (HST-SFN) transmission solutions including a solution of a non-SFN reference signal and a pre-compensation solution are standardized for a high-speed moving scene, and the Doppler acquisition in the pre-compensation solution is obtained by the base station through measurement of the uplink reference signal SRS instead of being reported by the UE.

It can be learned from the background that a real channel is composed of mixed small-scale information composed of a plurality of clusters and sub-paths, and therefore,

$$H_{u,s}(f,t) = \sqrt{\frac{k}{k+1}} H_{u,s}^{LOS}(f,t) + \sqrt{\frac{1}{k+1}} H_{u,s}^{NLOS}(f,t)$$

$$H_{u,s}(f,t) = \sqrt{\frac{k}{k+1}} \alpha_{los} \exp\left(j2\pi f_{d,los} t\right) \exp\left(-j2\pi f_{d,los} \tau_{los}\right)$$

$$+ \sqrt{\frac{1}{k+1}} \sum_{n=1}^{N} \sum_{m=1}^{M} \alpha_{los} \exp\left(j2\pi f_{d,m,m} t\right) \exp\left(-j2\pi f \tau_{n}\right)$$

$$H_{u,s}(f,t+\Delta t) = \sqrt{\frac{k}{k+1}} \alpha_{los} \exp\left(j2\pi f_{d,los}(t+\Delta t)\right) \exp\left(-j2\pi f_{d,los} \tau_{los}\right)$$

$$+ \sqrt{\frac{1}{k+1}} \sum_{n=1}^{N} \sum_{m=1}^{M} \alpha_{los} \exp\left(j2\pi f_{d,m,m}(t+\Delta t)\right) \exp\left(-j2\pi f \tau_{n}\right)$$

Therefore, theoretically, if the base station can estimate the channel at the current moment and the Doppler frequency offset value of each cluster or sub-path, and it is assumed that the Doppler frequency offset is relatively unchanged in a short time, the base station can estimate the channel at any moment in future.

However, in the current NR system, the channel transmission performance of the terminal in the medium-high speed scenario is significantly attenuated, because the base station cannot estimate the time-varying Doppler information or delay information of the current channel transmission through the CSI information reported by the terminal. If the base station cannot predict an accurate channel change within a certain period of time according to the current CSI information, the pre-coding calculated by reporting the current CSI cannot match the real channel at each moment, so that the channel transmission performance is greatly reduced.

However, the real channel is composed of mixed small-scale information composed of a plurality of clusters and sub-paths, and based on the report overhead consideration, the terminal may not report the Doppler frequency offset estimation values of all the sub-paths based on the multipath channel. Therefore, when the terminal only reports a single Doppler result based on the TRS measurement result, the channel prediction performance is affected; and when the terminal only reports multiple Doppler results based on the TRS measurement result, if the base station cannot obtain the relationship between the multiple Doppler frequency offsets and the delay paths, the base station cannot predict the multipath real channel.

To resolve the foregoing problem, an embodiment of this application provides an information transmission method and apparatus, a terminal, and a network side device, wherein the method and apparatus are based on a same application concept, and because a method and an apparatus solve a problem in a similar principle, implementation of an apparatus and a method may refer to each other, and details are not described herein again.

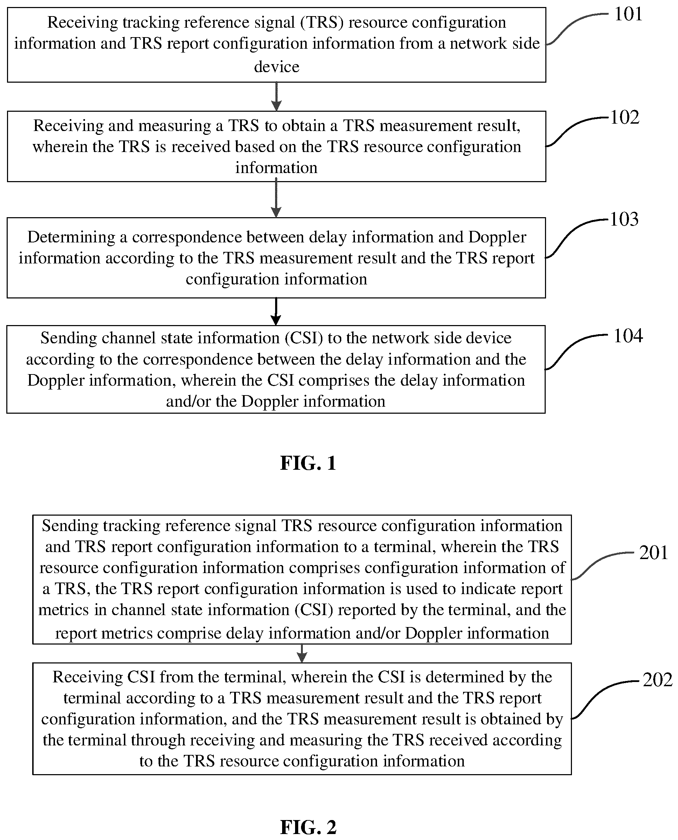

FIG. 1 shows a schematic flowchart of an information transmission method according to an embodiment of the present disclosure, the method is executed by a terminal, and the method may include:

Step 101: receiving tracking reference signal TRS resource configuration information and TRS report configuration information from a network side device.

Specifically, the TRS resource configuration information and the TRS report configuration information sent by the network side device through higher layer signaling may be received. It should be understood that the higher layer signaling includes TRS resource configuration information and TRS report configuration information.

The TRS resource configuration information includes configuration information of the TRS. Optionally, the TRS resource configuration information includes a plurality of resource sets, and each resource set includes configuration information of a plurality of TRSs.

Optionally, the plurality of resource sets are configured by the network-side device as an RRC parameter trs-Info.

The TRS report configuration information is used to indicate a report metrics in CSI reported by the terminal, and the report metrics includes delay information and/or Doppler information.

Step 102: receiving and measuring the TRSs to obtain a TRS measurement result, wherein the TRSs are received based on TRS resource configuration information.

This step may specifically include: receiving the TRS according to the TRS resource configuration information; and receiving and measuring the TRS to obtain the TRS measurement result.

Step 103: determining a correspondence between the delay information and the Doppler information according to the TRS measurement result and the TRS report configuration information.

Step 104: sending channel state information (CSI) to a network side device according to the determined correspondence between the delay information and the Doppler information, wherein the CSI includes delay information and/or Doppler information.

Here, the terminal determines the reporting metrics based on the TRS report configuration information, calculates Doppler information and/or delay information of the multipath channel based on the TRS measurement result, and sends the CSI to the network side device according to a target reporting mode, wherein the CSI includes the delay information and/or the Doppler information.

In the information transmission method of the embodiments of the present disclosure, first, the tracking reference signal (TRS) resource configuration information and the TRS report configuration information sent by the network side device are received; the TRS is then received and measured to obtain a TRS measurement result, wherein the TRS is received based on TRS resource configuration information; the correspondence between the delay information and the Doppler information is determined according to the TRS measurement result and the TRS report configuration information; according to the correspondence between the determined delay information and the Doppler information, channel state information (CSI) is sent to the network side device, wherein the CSI includes delay information and/or Doppler information, so that the terminal can calculate the reported delay and/or Doppler information of the current multipath small-scale channel based on the TRS measurement result to match the channel measurement result at the base station side, and assist the base station to perform channel prediction and precoding calculation at the moment in future based on the smaller overhead, thereby greatly optimizing the transmission performance in the medium-high speed scenario.

Optionally, the CSI includes K1 pieces of delay information and K1 pieces of Doppler information, wherein K1 is a positive integer greater than or equal to 1.

Further, the K1 pieces of delay information and the K1 pieces of Doppler information are in one-to-one correspondence according to the index values of the delay paths. Specifically, the same delay path/cluster may be in one-to-one correspondence with the delay information or Doppler information according to the index values.

It should be understood that the one-to-one correspondence means that the delay information of a certain delay path corresponds to the Doppler information of the delay path, for example, the delay information of the delay path A corresponds to the Doppler information of the delay path A.

Optionally, the CSI includes one piece of delay information and K2 pieces of Doppler information.

Specifically, in a case that the CSI includes one piece of delay information, the delay information corresponds to the first Doppler information. Here, the first Doppler information refers to the first Doppler information in the K2 pieces of Doppler information. Specifically, a delay path/cluster corresponding to the first Doppler information is same as a path/cluster corresponding to the delay information; or, the CSI includes K2 pieces of Doppler information; or, the CSI includes K2-1 pieces of delay information and K2 pieces of Doppler information, wherein K2 is a positive integer greater than 1.

Further, the K2 pieces of Doppler information includes Doppler frequency offset absolute values of K2 delay paths or quantized values of Doppler frequency offset absolute values.

Optionally, in a case that the CSI includes K2-1 pieces of delay information, the K2-1 pieces of delay information includes K2-1 delay difference offset values relative to the first delay path.

Optionally, the CSI includes K3 groups of Doppler information, and K3 is a positive integer greater than or equal to 1.

Further, a value of K3 is configured by the network side device by using higher layer signaling or in a predefined manner.

It should be noted that the network side device configures the value of K3, and the terminal reports the K3 group of Doppler information according to the value of K3 configured by the network side device.

Optionally, a value of K3 is determined by a TRS measurement result and a preset value A, wherein K3 is less than or equal to A, and a value of A is configured by the network side device by using higher layer signaling or in a predefined manner.

Here, the terminal may report K3 groups of Doppler information according to a specific TRS measurement result, but the maximum value of K3 shall not exceed the upper limit of the configuration of the network side device, that is, the value of A.

Further, each group of Doppler information may include 1 piece of delay information and Doppler frequency offset information of B1 delay paths.

Here, the Doppler frequency offset information may be a Doppler frequency offset absolute value or a quantized value of the Doppler frequency offset absolute value; or, each group of Doppler information includes Doppler frequency offset information or Doppler difference offset values of B1 delay paths, and the CSI further includes delay information of a first delay path in the B1 delay paths included in each group of Doppler information; or, each group of Doppler information includes Doppler frequency offset information or Doppler difference offset values of B1 delay paths, and the CSI further includes delay information of a first delay path in B1 delay paths included in the first group of Doppler information and delay difference offset values of the K3-1 groups relative to the first delay path of the first group, and B1 is a positive integer greater than 1.

Further, each group of Doppler information includes Doppler information of m delay paths, wherein m = X/K3, and X is the total number of pieces of Doppler information; or, each group of Doppler information includes Doppler information of n delay paths that meet a first condition, wherein a delay path that meets a first condition is a delay path that an absolute value of a difference of a Doppler frequency offset between the delay path and the first delay path in the group is less than or equal to a preset threshold.

It should be noted that, in this embodiment of the present disclosure, in a case that the CSI includes Y pieces of Doppler information and Y is a positive integer greater than or equal to 1, Y pieces of Doppler information include Y Doppler values; or, when Y is greater than 1, the Y pieces of Doppler information includes a Doppler value of a first delay path and Y-1 difference offset values of Y-1 delay paths relative to the first delay path.

When Y is equal to 1, the Doppler information is a Doppler value of the first delay path, a maximum Doppler value, or a weighted average of Doppler values of Y delay paths.

It should be noted that, Y herein refers to generally any one of K1, K2, and B1 described above.

Here, the Doppler value may be a Doppler frequency offset absolute value or a quantized value of a Doppler frequency offset absolute value.

Further, when Y is greater than 1, Doppler values of Y delay paths are sorted from large to small, or delay absolute values of Y delay paths are sorted from large to small.

In the embodiments of the present disclosure, the first delay path is a delay path with a maximum delay or a maximum Doppler frequency offset.

By adopting the information transmission method of the embodiments of the present disclosure, the terminal can calculate the reported delay and/or Doppler information of the current multipath small-scale channel based on the TRS measurement result to match the channel measurement result of the base station side, and the base station is assisted to perform channel prediction and precoding calculation at the moment in future on the basis of smaller overhead, so that the transmission performance in the medium-high speed scenario is greatly optimized.

FIG. 2 is a schematic flowchart of an information transmission method according to an embodiment of the present disclosure. The method is executed by a network side device, and the method may include:

Step 201: sending tracking reference signal TRS resource configuration information and TRS report configuration information to a terminal, wherein the TRS resource configuration information includes configuration information of the TRS, the TRS report configuration information is used to indicate a report metrics in channel state information (CSI) reported by the terminal, and the report metrics includes delay information and/or Doppler information.

Optionally, the TRS resource configuration information includes a plurality of resource sets, and each resource set includes configuration information of a plurality of TRSs.

Optionally, the plurality of resource sets are configured by the network-side device as an RRC parameter trs-Info, and may be sent to the terminal by using RRC signaling.

In an optional implementation, the step 201 may include: sending the TRS resource configuration information and the TRS report configuration information to the terminal through higher layer signaling.

It should be understood that the higher layer signaling includes TRS resource configuration information and TRS report configuration information.

Step 202: receiving the CSI sent by the terminal, wherein the CSI is determined by the terminal according to the TRS measurement result and the TRS report configuration information, and the TRS measurement result is obtained by the terminal by receiving and measuring the TRS received according to the TRS resource configuration information.

It should be noted that the CSI sent by the terminal includes the reported report metrics indicated by the TRS report configuration information, that is, the CSI includes the delay information and/or the Doppler information.

In this way, based on the CSI reported by the terminal which includes time delay and/or Doppler information of the current multipath small-scale channel, the network side device matches a channel measurement result of the base station side, and the base station is assisted to perform channel prediction and precoding calculation at a moment in future on the basis of a smaller overhead, thereby greatly optimizing the transmission performance in the medium-high speed scenario.

In the information transmission method of the embodiments of the present disclosure, the TRS resource configuration information and the TRS report configuration information are sent to the terminal, the TRS resource configuration information includes configuration information of the TRS, the TRS report configuration information is used to indicate the report metrics in the channel state information CSI reported by the terminal, and the report metrics includes delay information and/or Doppler information; the network side device receives the CSI sent by the terminal, wherein the CSI is determined by the terminal according to the TRS measurement result and the TRS report configuration information, and the TRS measurement result is obtained by the terminal by receiving and measuring the TRS received according to the TRS resource configuration information, so as to match the channel measurement result of the base station side based on the CSI reported by the terminal which includes the delay information and/or Doppler information of the current multipath small-scale channel, and assist the base station to perform channel prediction and precoding calculation at the future moment based on the smaller overhead, thereby greatly optimizing the transmission performance in the medium-high speed scenario.

Further, after receiving the CSI sent by the terminal, the method in the embodiments of the present disclosure may further include:

Step 203: parsing the CSI to obtain delay information and/or Doppler information.

In an optional implementation, step 203 may include: a1: in first $K1 \times \lceil \log_2(X) \rceil$ bits in the CSI, every $\lceil \log_2(X) \rceil$ bits being taken as one piece of delay information; a2: in last $K1 \times \lceil \log_2(Y) \rceil$ bits in the CSI, every $\lceil \log_2(Y) \rceil$ bits being taken as one piece of Doppler information ,wherein K1 is a positive integer greater than or equal to 1, X is the number of quantization steps of a delay, and Y is the number of quantization steps of Doppler.

Optionally, the delay information has a correspondence with the Doppler information. That is, the K1 pieces of delay information and the K1 pieces of Doppler information are in one-to-one correspondence according to the index values of the delay paths. Specifically, the same delay path/cluster may be in one-to-one correspondence with the index value, and it should be understood that the one-to-one correspondence means that the delay information of a certain delay path corresponds to the Doppler information of the delay path, for example, the delay information of the delay path A corresponds to the Doppler information of the delay path A.

Optionally, the first delay information is delay information of the first delay path.

In another optional implementation, step 203 may include:

b1: first $\lceil \log_2(X) \rceil$ bits in CSI being taken as one piece of delay information, and in last $K2 \times \lceil \log_2(Y) \rceil$ bits in CSI, every $\lceil \log_2(Y) \rceil$ bits being taken as one piece of Doppler information; or, c1: in $K2 \times \lceil \log_2(Y) \rceil$ bits in the CSI, every $\lceil \log_2(Y) \rceil$ bits being taken as one piece of Doppler information;

or, d1: in first $(K2-1) \times \lceil \log_2(X) \rceil$ bits in CSI, every $\lceil \log_2(X) \rceil$ bits being taken as one piece of delay information; and in last $K2 \times \lceil \log_2(Y) \rceil$ bits in the CSI, every $\lceil \log_2(Y) \rceil$ bits being taken as one piece of Doppler information;

K2 is a positive integer greater than 1, X is the number of quantization steps of a delay, and Y is the number of quantization steps of Doppler.

Optionally, in a case that the delay information is one piece, the delay information corresponds to the first Doppler information in the K2 pieces of Doppler information, and specifically, the delay information and the first Doppler information correspond to the same delay path/cluster, or the delay information is the delay information of the first delay path.

Optionally, the first Doppler information in the K2 pieces of Doppler information is Doppler information corresponding to the first delay path.

In yet another optional implementation, step 203 may include:

e1: in $K3 \times \left\lceil \log_2\left(ZY\right) \right\rceil$ bits in the CSI, every $\left\lceil \log_2\left(ZY\right) \right\rceil$ bits being taken as one group of Doppler information, wherein K3 is a positive integer greater than or equal to 1, Z is the number of delay paths in the Doppler group, and Y is the number of quantization steps of Doppler.

An implementation process of the information transmission method of the present disclosure is described below from a perspective of interaction between the terminal and the network side device. For example, the network side device is a base station.

Embodiment 1

Step 1: the base station sends TRS resource configuration information and TRS report configuration information to the terminal through higher layer signaling.

The base station may associate one piece of TRS report configuration information for the current TRS resource configuration information, wherein the TRS report configuration information is used to indicate the report metrics in the CSI reported by the terminal. The report metrics is {delay, Doppler}.

Step 2: the terminal receives the TRS through the TRS resource configuration information sent by the base station.

Step 3: the terminal determines a report metrics by using the TRS report configuration information sent by the base station, calculates and reports CSI based on the TRS measurement result, wherein the CSI includes K1 pieces of delay information and K1 pieces of Doppler information.

Here, the TRS measurement result is a measurement result obtained by receiving and measuring the TRS by the terminal.

The specific calculation process is as follows:

First, Inverse Fast Fourier Transform (IFFT) calculation is performed on a frequency-domain channel of a TRS to obtain a Power-Delay Profile (PDP); the first K1 effective delay paths are screened according to a certain principle, and delay absolute values $\tau_0,...,\tau_j$ of K1 delay paths are obtained.

Then, time-domain correlation processing is performed on CSI-RSs of different symbols.

Taking four CSI-RS resources as one TRS burst, that is, there are four symbols with TRS transmission in a physical resource block (PRB). If the positions of the resource elements (RE) of the symbol #5 and the symbol #8 in the two slots are the same. Then, the correlation processing of the two symbols may be performed to obtain a correlation value:

$$C_1^{(r,j)} = \sum_{p=0}^{1}\sum_{i=0}^{1} h_{IDFT,l_{RS}^{(P)}=i,k'=MaxIdx_{idx=j}^{(r)}}^{(r,p)*} \cdot h_{IDFT,l_{RS}^{(P)}=i+2,k'=MaxIdx_{idx=j}^{(r)}}^{(r,p)}$$

wherein, $MaxIdx_{idx=j}^{(r)}$ represents the position of the time-domain channel corresponding to the effective path j after the IDFT transformation.

Then, the phase of the correlation value corresponding to the effective path j is calculated as:

$$\theta^{(r,j)} = \arctan\left(imag\left(C_1^{(r,j)}\right) \middle/ real\left(C_1^{(r,j)}\right)\right)$$

Then, according to the quadrant where $C_1^{(r,j)}$ is located, $\theta^{(r,j)}$ is adjusted.

Finally, the Doppler shift of the effective path j corresponding to the r-th antenna is calculated as $\theta^{(r,j)}$:

$$\theta^{(r,j)} = \theta^{(r,j)} \middle/ \left(2\pi \cdot 0.0005\right)$$

Finally, the terminal reports the delay absolute values $\tau_0,...,\tau_j$ of the K1 delay paths and Doppler information of the K1 delay paths. Specifically, the Doppler information is a quantized value of a Doppler frequency offset absolute value or an absolute value of a Doppler frequency offset.

Step 4: the base station receives feedback information from the terminal side, wherein, in first $K1 \times \lceil \log_2(X) \rceil$ bits, every $\lceil \log_2(X) \rceil$ bits are taken as one piece of delay information; and in last $K1 \times \lceil \log_2(Y) \rceil$ bits, every $\lceil \log_2(Y) \rceil$ bits are taken as one piece of Doppler information, wherein, K1 is a positive integer greater than or equal to 1, X is the number of quantization steps of a delay, and Y is the number of quantization steps of Doppler.

Optionally, the delay information has a correspondence with the Doppler information.

Optionally, the first delay information is delay information of the first delay path.

Embodiment 2

Step 1: the base station sends TRS resource configuration information and TRS report configuration information to the terminal through higher layer signaling.

The base station may associate one piece of TRS report configuration information for the current TRS resource configuration information, wherein the TRS report configuration information is used to indicate the report metrics in the CSI reported by the terminal. The report metrics is { delay, Doppler}.

Step 2: the terminal receives the TRS through the TRS resource configuration information sent by the base station.

Step 3: the terminal determines the report metrics through the TRS report configuration information sent by the base station, calculates and reports CSI based on the TRS measurement result, and the CSI includes one piece of delay information and K2 pieces of Doppler information.

Here, the TRS measurement result is a measurement result obtained by the terminal through receiving and measuring the TRS.

For a specific calculation process, refer to Embodiment 2, and details are not described herein again.

Finally, the terminal reports a delay absolute value of a first delay path in delay absolute values of K2 delay paths and Doppler information of the K2 delay paths.

Specifically, the Doppler information of the K2 delay paths is Doppler frequency offset (frequency shift) absolute values of K2 delay paths. Optionally, the Doppler frequency offset absolute values of K2 delay paths are sorted from large to small, or delay absolute values of K2 delay paths are sorted from large to small.

Specifically, Doppler information of K2 delay paths is a Doppler frequency offset absolute value of one first delay path and difference offset values of K2-1 paths relative to the first delay path.

Step 4: the base station receives feedback information from the terminal side, wherein the first $\lceil \log_2(X) \rceil$ bits are taken as one piece of delay information, and in last $K2 \times \lceil \log_2(Y) \rceil$ bits, every $\lceil \log_2(Y) \rceil$ bits are taken as one piece of Doppler information, the K2 is a positive integer greater than 1, X is the number of quantization steps of a delay, and Y is the number of quantization steps of Doppler.

Optionally, the delay information has a correspondence with the Doppler information.

Optionally, the first delay information is delay information of the first delay path.

Embodiment 3

Step 1: the base station sends TRS resource configuration information and TRS report configuration information to the terminal through higher layer signaling.

The base station may associate one piece of TRS report configuration information to the current TRS resource configuration information, wherein the TRS report configuration information is used to indicate the report metrics in the CSI reported by the terminal. The report metrics is {Doppler}.

Step 2: the terminal receives the TRS through the TRS resource configuration information sent by the base station.

Step 3: the terminal determines the report metrics by using the TRS report configuration information sent by the base station, calculates and reports the CSI based on the TRS measurement result, and the CSI includes K2 pieces of Doppler information.

For a specific calculation process, refer to Embodiment 1, and details are not described herein again.

Finally, the terminal reports the Doppler information of the K2 delay paths.

Specifically, the Doppler information of the K2 delay paths is Doppler frequency offset absolute values of K2 delay paths. Optionally, Doppler frequency offset absolute values of K2 delay paths are sorted from large to small, or delay absolute values of K2 delay paths are sorted from large to small.

Specifically, Doppler information of K2 delay paths is a Doppler frequency offset absolute value of one first delay path and difference offset values of K2-1 delay paths relative to the first delay path.

Step 4: the base station receives feedback information from the terminal side, wherein in $K2 \times \left\lceil \log_2(Y) \right\rceil$ bits, every $\left\lceil \log_2(Y) \right\rceil$ bits are taken as one piece of Doppler information, wherein K2 is a positive integer greater than 1, and Y is the number of quantization steps of Doppler.

Optionally, the delay information corresponding to the first Doppler information is delay information of the first delay path.

Embodiment 4

Step 1: the base station sends TRS resource configuration information and TRS report configuration information to the terminal through higher layer signaling.

The base station may associate one piece of TRS report configuration information to the current TRS resource configuration information, wherein the TRS report configuration information is used to indicate the report metrics in the CSI reported by the terminal. The report metrics is {Doppler}.

The base station also indicates K3 Doppler group configurations for the terminal.

Optionally, the base station configures the value of K3 in a higher layer signaling or a predefined manner.

Optionally, a value of K3 is determined by a TRS measurement result and a preset value A, wherein K3 is less than or equal to A, and a value of A is configured by the network side device by using higher layer signaling or a predefined manner.

Step 2: the terminal receives the TRS through the TRS resource configuration information sent by the base station.

Step 3: the terminal determines the report metrics by using the TRS report configuration information sent by the base station, calculates and reports the CSI based on the TRS measurement result, and the CSI includes K3 groups of Doppler information.

For a specific calculation process, refer to Embodiment 1, and details are not described herein again.

Finally, the terminal reports K3 groups of Doppler frequency offset information.

Step 4: the base station receives feedback information from the terminal side, wherein in $K3 \times \left\lceil \log_2(ZY) \right\rceil$ bits, every $\left\lceil \log_2(ZY) \right\rceil$ bits are taken as one piece of Doppler information, wherein K3 is a positive integer greater than or equal to 1, Z is the number of delay paths in the Doppler group, and Y is the quantization order of the Doppler.

In the embodiments of the present disclosure, the first delay path is a delay path with a maximum delay or a maximum Doppler frequency offset.

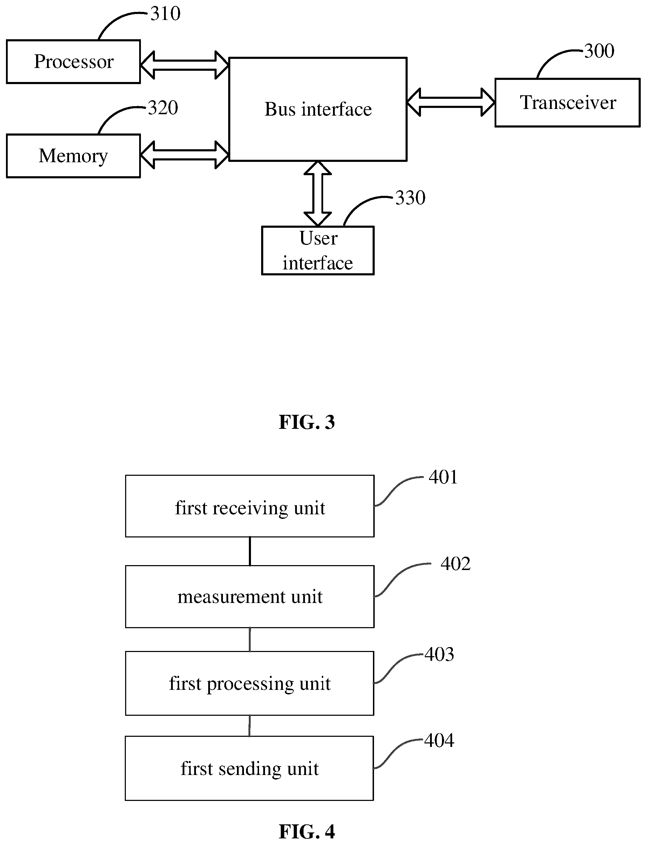

As shown in FIG. 3, an embodiment of the present disclosure further provides a terminal, including: a memory 320, a transceiver 300, and a processor 310: a memory 320, configured to store program instructions. The transceiver 300 is configured to send and receive data under the control of the processor 310; and the processor 310 is configured to read the program instructions in the memory 320 and perform the following operations:

receiving tracking reference signal (TRS) resource configuration information and TRS report configuration information from a network side device through the transceiver 300; receiving and measuring a TRS to obtain a TRS measurement result, wherein the TRS is received based on the TRS resource configuration information; determining a correspondence between delay information and Doppler information according to the TRS measurement result and the TRS report configuration information; and sending channel state information (CSI) to the network side device according to the correspondence between the delay information and the Doppler information, wherein the CSI includes the delay information and/or the Doppler information..

In FIG. 3, the bus architecture may include any number of interconnected buses and bridges, and specifically, various circuits of one or more processors represented by the processor 310 and a memory represented by the memory 320 are linked together. The bus architecture may also link various other circuits, such as a peripheral device, a voltage regulator, and a power management circuit, which are well known in the art, and therefore are not further described herein. The bus interface provides an interface. The transceiver 300 may be a plurality of elements, including a transmitter and a receiver, and provides units for communicating with various other apparatuses on a transmission medium, wherein the transmission mediums include transmission media such as a wireless channel, a wired channel, and an optical cable. For different user equipment, the user interface 330 may also be an interface capable of being externally connected to a device needing to be internally connected, and the connected device includes but is not limited to a keypad, a display, a speaker, a microphone, a joystick, and the like.

The processor 310 is responsible for managing the bus architecture and general processing, and the memory 320 may store data used by the processor 310 when performing operations.

Optionally, the processor 310 may be a Central Processing Unit (CPU), an Application Specific Integrated Circuit (ASIC), a Field-Programmable Gate Array (FPGA), or a Complex Programmable Logic Device (CPLD), and the processor 310 may also adopt a multi-core architecture.

The processor 310 is configured to invoke the program instructions stored in the memory, to perform any one of the methods provided in the embodiments of this application according to the obtained executable instructions. The processor 310 and the memory 320 may also be physically separated.

Optionally, the CSI includes K1 pieces of delay information and K1 pieces of Doppler information, wherein K1 is a positive integer greater than or equal to 1.

Optionally, the K1 pieces of delay information and the K1 pieces of Doppler information are in one-to-one correspondence according to an index value of a delay path.

Optionally, the CSI includes one piece of delay information and K2 pieces of Doppler information; or the CSI includes K2 pieces of Doppler information; or the CSI includes K2-1 pieces of delay information and K2 pieces of Doppler information, wherein K2 is a positive integer greater than 1.

Optionally, in a case that the CSI includes one piece of delay information, the piece of delay information corresponds to first Doppler information.

Optionally, in a case that the CSI includes K2-1 pieces of delay information, the K2-1 pieces of delay information includes K2-1 delay difference offset values relative to a first delay path of the K2 delay paths.

Optionally, the CSI includes K3 groups of Doppler information, and K3 is a positive integer greater than or equal to 1.

Optionally, a value of K3 is configured by the network side device by using higher layer signaling or in a predefined manner; or a value of K3 is determined by the TRS measurement result and a preset value A, wherein K3 is less than or equal to A, and a value of A is configured by the network side device by using higher layer signaling or a predefined manner.

Optionally, each group of the K3 groups of Doppler information includes one piece of delay information and Doppler frequency offset information of B1 delay paths; or each group of the K3 groups of Doppler information includes Doppler frequency offset information or Doppler difference offset values of B1 delay paths, and the CSI further includes delay information of a first delay path in the B1 delay paths included in the each group; or each group of the K3 groups of Doppler information includes Doppler frequency offset information or Doppler difference offset values of B1 delay paths, and the CSI further includes delay information of a first delay path in B1 delay paths included in a first group of the K3 groups of Doppler information and delay difference offset values of K3-1 groups of the K3 groups relative to a first delay path of the first group, and B1 is a positive integer greater than 1.

Optionally, each group of the K3 groups of Doppler information includes Doppler information of m delay paths, wherein m = X/K3, and X is a total quantity of Doppler information; or each group of the K3 groups of Doppler information includes Doppler information of n delay paths that meet a first condition, wherein a delay path that meets the first condition is a delay path that the absolute value of difference between a Doppler frequency offset of the delay path and a Doppler frequency offset of a first delay path in the group is less than or equal to a preset threshold.

Optionally, in a case that the CSI includes Y pieces of Doppler information and Y is a positive integer greater than or equal to 1, the Y pieces of Doppler information include Y Doppler values; or, when Y is greater than 1, the Y pieces of Doppler information include a Doppler value of a first delay path and difference offset values of Y-1 delay paths relative to the first delay path; when Y is equal to 1, the Doppler information is a Doppler value of a first delay path, a maximum Doppler value, or a weighted average value of Doppler values of Y delay paths.

Optionally, when Y is greater than 1, Doppler values of Y delay paths are sorted in an order from large to small, or delay absolute values of the Y delay paths are sorted in an order from large to small

In the embodiments of the present disclosure, the first delay path is a delay path with a maximum delay or maximum Doppler frequency offset.

In the terminal of the embodiments of the present disclosure, first, the tracking reference signal TRS resource configuration information and the TRS report configuration information sent by the network side device are received; the TRS is then received and measured to obtain a TRS measurement result, wherein the TRS is received based on TRS resource configuration information; the correspondence between the delay information and the Doppler information is determined according to the TRS measurement result and the TRS report configuration information; according to the correspondence between the delay information and the Doppler information, the information state information CSI is sent to the network side device, wherein the CSI includes the delay information and/or the Doppler information, so that the terminal can calculate the reported time delay and/or Doppler information of the current multipath small-scale channel based on the TRS measurement result to match the channel measurement result of the base station side, and the base station is assisted to perform channel prediction and precoding calculation at the future moment with the smaller overhead, thereby greatly optimizing the transmission performance in the medium-high speed scenario.

As shown in FIG. 4, an embodiment of the present disclosure further provides an information transmission apparatus. The apparatus includes:

a first receiving unit 401, configured to receive tracking reference signal (TRS) resource configuration information and TRS report configuration information from a network side device;
a measurement unit 402, configured to receive and measure a TRS to obtain a TRS measurement result, wherein the TRS is received based on the TRS resource configuration information; and
a first processing unit 403, configured to determine a correspondence between delay information and Doppler information according to the TRS measurement result and the TRS report configuration information; and
a first sending unit 404, configured to send channel state information (CSI) to the network side device according to the correspondence between the delay information and the Doppler information, wherein the CSI includes the delay information and/or the Doppler information.

Optionally, the CSI includes K1 pieces of delay information and K1 pieces of Doppler information, wherein K1 is a positive integer greater than or equal to 1.

Optionally, the K1 pieces of delay information and the K1 pieces of Doppler information are in one-to-one correspondence according to an index value of a delay path.

Optionally, the CSI includes one piece of delay information and K2 pieces of Doppler information; or the CSI includes K2 pieces of Doppler information; or the CSI includes K2-1 pieces of delay information and K2 pieces of Doppler information, wherein K2 is a positive integer greater than 1.

Optionally, in a case that the CSI includes one piece of delay information, the piece of delay information corresponds to first Doppler information.

Optionally, in a case that the CSI includes the K2-1 pieces of delay information, the K2-1 pieces of delay information includes K2-1 delay difference offset values relative to a first delay path of the K2 delay paths.

Optionally, the CSI includes K3 groups of Doppler information, and K3 is a positive integer greater than or equal to 1.

Optionally, a value of K3 is configured by the network side device by using higher layer signaling or in a predefined manner; or a value of K3 is determined by the TRS measurement result and a preset value A, wherein K3 is less than or equal to A, and a value of A is configured by the network side device by using higher layer signaling or a predefined manner.

Optionally, each group of the K3 groups of Doppler information includes one piece of delay information and Doppler frequency offset information of B1 delay paths; or each group of the K3 groups of Doppler information includes Doppler frequency offset information or Doppler difference offset values of B1 delay paths, and the CSI further includes delay information of a first delay path in the B1 delay paths included in the each group; or each group of Doppler information includes Doppler frequency offset information or Doppler difference offset values of B1 delay paths, and the CSI further includes delay information of a first delay path in B1 delay paths included in a first group of Doppler information and delay difference offset values of K3-1 groups of the K3 groups relative to a first delay path of the first group, and B1 is a positive integer greater than 1.

Optionally, each group of the K3 groups of Doppler information includes Doppler information of m delay paths, wherein m = X/K3, and X is a total quantity of Doppler information; or each group of the K3 groups of Doppler information includes Doppler information of n delay paths that meet a first condition, wherein a delay path that meets the first condition is a delay path that the absolute value of difference between a Doppler frequency offset of the delay path and a Doppler frequency offset of a first delay path in the group is less than or equal to a preset threshold.

Optionally, in a case that the CSI includes Y pieces of Doppler information and Y is a positive integer greater than or equal to 1, the Y pieces of Doppler information include Y Doppler values; or, when Y is greater than 1, the Y pieces of Doppler information include a Doppler value of a first delay path and difference offset values of Y-1 delay paths relative to the first delay path; when Y is equal to 1, the Doppler information is a Doppler value of a first delay path, a maximum Doppler value, or a weighted average value of Doppler values of Y delay paths.

Optionally, when Y is greater than 1, Doppler values of Y delay paths are sorted in an order from large to small, or delay absolute values of the Y delay paths are sorted in an order from large to small.

In the embodiments of the present disclosure, the first delay path is a delay path with a maximum delay or maximum Doppler frequency offset.

In the information transmission apparatus of the embodiments of the present disclosure, first, the tracking reference signal TRS resource configuration information and the TRS report configuration information sent by the network side device are received; the TRS is then received and measured to obtain a TRS measurement result, wherein the TRS is received based on TRS resource configuration information; the correspondence between the delay information and the Doppler information is determined according to the TRS measurement result and the TRS report configuration information; according to the correspondence between the delay information and the Doppler information, the information state information CSI is sent to the network side device, wherein the CSI includes the delay information and/or the Doppler information, so that the terminal can calculate the reported time delay and/or Doppler information of the current multipath small-scale channel based on the TRS measurement result to match the channel measurement result of the base station side, and the base station is assisted to perform channel prediction and precoding calculation at the future moment with the smaller overhead, thereby greatly optimizing the transmission performance in the medium-high speed scenario.

It should be noted that the division of the units in this embodiment of this application is schematic, is merely a logical function division, and may have another division manner in actual implementation. In addition, functional units in the embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a processor-readable storage medium. Based on such understanding, the technical solutions of the present disclosure essentially or all or part of the technical solutions may be embodied in the form of a software product, and the computer software product is stored in a storage medium, and includes several instructions for causing a computer device (which may be a personal computer, a server, or a network device) or a processor to perform all or part of the steps of the methods described in the embodiments of this application. The foregoing storage medium includes any medium that can store program code, such as a USB flash drive, a removable hard disk, a read-only memory (ROM), a random access memory (RAM), a magnetic disk, or an optical disk.

It should be noted that, the apparatus provided in the embodiments of the present disclosure can implement all method steps implemented in the foregoing method embodiments, and can achieve the same technical effect, and details of the same parts and beneficial effects as those in the method embodiments in this embodiment are not described herein again.

In some embodiments of the present disclosure, a processor-readable storage medium is further provided, wherein the processor-readable storage medium stores program instructions, and the program instructions are configured to cause the processor to perform the following steps:

receiving tracking reference signal (TRS) resource configuration information and TRS report configuration information from a network side device;

receiving and measuring a TRS to obtain a TRS measurement result, wherein the TRS is received based on the TRS resource configuration information;

determining a correspondence between delay information and Doppler information according to the TRS measurement result and the TRS report configuration information; and

sending channel state information (CSI) to the network side device according to the correspondence between the delay information and the Doppler information, wherein the CSI includes the delay information and/or the Doppler information.

When the program is executed by the processor, all implementations of the foregoing method embodiments applied to the terminal side shown in FIG. 1 can be implemented, to avoid repetition, and details are not described herein again.

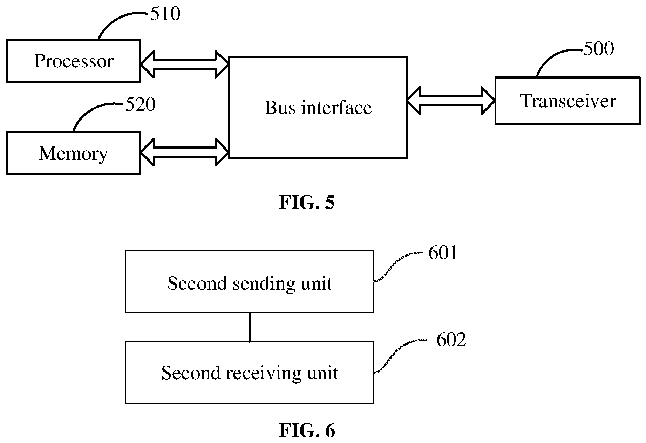

As shown in FIG. 5, an embodiment of the present disclosure further provides a network side device, including: a memory 520, a transceiver 500, and a processor 510. The memory 520 is configured to store a computer program; the transceiver 500 is configured to send and receive data under control of the processor 510; and the processor 510 is configured to read the computer program in the memory 520 and perform the following operations:

sending tracking reference signal TRS resource configuration information and TRS report configuration information to a terminal through the transceiver 500, wherein the TRS resource configuration information includes configuration information of a TRS, the TRS report configuration information is used to indicate report metrics in channel state information (CSI) reported by the terminal, and the report metrics include delay information and/or Doppler information;

receiving CSI from the terminal through the transceiver 500, wherein the CSI is determined by the terminal according to a TRS measurement result and the TRS report configuration information, and the TRS measurement result is obtained by the terminal through receiving and measuring the TRS received according to the TRS resource configuration information.

In FIG. 5, the bus architecture may include any number of interconnected buses and bridges, and specifically, various circuits of one or more processors represented by the processor 510 and a memory represented by the memory 520 are linked together. The bus architecture may also link various other circuits, such as a peripheral device, a voltage regulator, and a power management circuit, which are well known in the art, and therefore are not further described herein. The bus interface provides an interface. The transceiver 500 may be a plurality of elements, including a transmitter and a receiver, and provides units for communicating with various other apparatuses on a transmission medium, wherein the transmission mediums include transmission media such as a wireless channel, a wired channel, and an optical cable. The processor 510 is responsible for managing the bus architecture and general processing, and the memory 520 may store data used by the processor 510 when performing operations.

The processor 510 may be a Central Processing Unit (CPU), an Application Specific Integrated Circuit (ASIC), a Field-Programmable Gate Array (FPGA), or a Complex Programmable Logic Device (CPLD), and the processor may also adopt a multi-core architecture.

Optionally, the transceiver 500 is further configured for sending the TRS resource configuration information and the TRS report configuration information to the terminal through higher layer signaling.

Optionally, the processor 510 is further configured for parsing the CSI to obtain the delay information and/or the Doppler information

Optionally, the processor 510 is further configured for: taking each group including $\lceil \log_2(X) \rceil$ bits in first $K1 \times \lceil \log_2(X) \rceil$ bits in the CSI as one piece of delay information; taking each group including $\lceil \log_2(Y) \rceil$ bits in last $K1 \times \lceil \log_2(Y) \rceil$ bits in the CSI as one piece of Doppler information; wherein K1 is a positive integer greater than or equal to 1, X is a quantity of quantization steps for delay, and Y is a quantity of quantization steps for Doppler.

Optionally, the delay information has a correspondence with the Doppler information.

Optionally, first delay information is delay information of a first delay path.

Optionally, the processor 510 is further configured for: taking first $\lceil \log_2(X) \rceil$ bits in the CSI as one piece of delay information, and taking each group including $\cdot\lceil \log_2(Y) \rceil$ bits in last $K2 \times \lceil \log_2(Y) \rceil$ bits as one piece of Doppler information; or taking each group including $\lceil \log_2(Y) \rceil$ bits in $K2 \times \lceil \log_2(Y) \rceil$ bits in the CSI as one piece of Doppler information; or taking each group including $\lceil \log_2(X) \rceil$ bits in first $(K2-1) \times \lceil \log_2(X) \rceil$ bits in the CSI as one piece of delay information, and taking each group including $\lceil \log_2(Y) \rceil$ bits in last $K2 \times \lceil \log_2(Y) \rceil$ bits as one piece of Doppler information; wherein K2 is a positive integer greater than 1, X is a quantity of quantization steps for delay, and Y is a quantity of quantization steps for Doppler.

Optionally, in a case that the delay information is one piece of delay information, the delay information corresponds to a first piece of Doppler information in K2 pieces of Doppler information, or the delay information is delay information of a first delay path.

Optionally, the first piece of Doppler information in the K2 pieces of Doppler information is Doppler information corresponding to the first delay path.

Optionally, the processor 510 is further configured for: taking each group including $\lceil \log_2(ZY) \rceil$ bits in $K3 \times \lceil \log_2(ZY) \rceil$ bits in the CSI as one piece of Doppler information, wherein K3 is a positive integer greater than or equal to 1, Z is a quantity of delay paths in a Doppler group, and Y is a quantity of quantization steps for Doppler.

In the embodiments of the present disclosure, the first delay path is a delay path with a maximum delay or a maximum Doppler frequency offset.

The network side device in this embodiment of the present disclosure sends the TRS resource configuration information and the TRS report configuration information to the terminal, the TRS resource configuration information includes configuration information of the TRS, the TRS report configuration information is used to indicate a report metrics in the channel state information CSI reported by the terminal, and the report metrics includes delay information and/or Doppler information; receives the CSI sent by the terminal, wherein the CSI is determined by the terminal according to the TRS measurement result and the TRS report configuration information, and the TRS measurement result is obtained by the terminal by receiving and measuring the TRS received according to the TRS resource configuration information, so as to match the channel measurement result of the base station side based on the CSI reported by the terminal which includes the delay information and/or Doppler information of the multipath small-scale channel, and assist the base station to perform channel prediction and precoding calculation at the future moment with the smaller overhead, thereby greatly optimizing the transmission performance in the medium-high speed scenario.

As shown in FIG. 6, an implementation of the present disclosure further provides an information transmission apparatus. The apparatus includes:

a second sending unit 601, configured to send tracking reference signal TRS resource configuration information and TRS report configuration information to a terminal, wherein the TRS resource configuration information includes configuration information of a TRS, the TRS report configuration information is used to indicate report metrics in channel state information (CSI) reported by the terminal, and the report metrics include delay information and/or Doppler information;

a second receiving unit 602, configured to receiving CSI from the terminal, wherein the CSI is determined by the terminal according to a TRS measurement result and the TRS report configuration information, and the TRS measurement result is obtained by the terminal through receiving and measuring the TRS received according to the TRS resource configuration information.

Optionally, the second sending unit 601 is further configured to send the TRS resource configuration information and the TRS report configuration information to the terminal through higher layer signaling.

Optionally, the information transmission apparatus in the embodiments of the present disclosure further includes: a parsing unit, configured to parse the CSI to obtain the delay information and/or the Doppler information.

Optionally, the parsing unit is specifically configured for:

taking each group including $\lceil \log_2(X) \rceil$ bits in first $K1 \times \lceil \log_2(X) \rceil$ bits in the CSI as one piece of delay information;

taking each group including $\lceil \log_2(Y) \rceil$ bits in last $K1 \times \lceil \log_2(Y) \rceil$ bits in the CSI as one piece of Doppler information; wherein K1 is a positive integer greater than or equal to 1, X is a quantity of quantization steps for delay, and Y is a quantity of quantization steps for Doppler.

Optionally, the delay information has a correspondence with the Doppler information.

Optionally, first delay information is delay information of a first delay path.

Optionally, the parsing unit is specifically configured for taking first $\lceil \log_2(X) \rceil$ bits in the CSI as one piece of delay information, and taking each group including $\lceil \log_2(Y) \rceil$ bits in last $K2 \times \lceil \log_2(Y) \rceil$ bits as one piece of Doppler information; or taking each group including $\lceil \log_2(Y) \rceil$ bits in $K2 \times \lceil \log_2(Y) \rceil$ bits in the CSI as one piece of Doppler information; or taking each group including $\lceil \log_2(X) \rceil$ bits in first $(K2-1) \times \lceil \log_2(X) \rceil$ bits in the CSI as one piece of delay information, and taking each group including $\lceil \log_2(Y) \rceil$ bits in last $K2 \times \lceil \log_2(Y) \rceil$ bits as one piece of Doppler information; wherein K2 is a positive integer greater than 1, X is a quantity of quantization steps for delay, and Y is a quantity of quantization steps for Doppler.

Optionally, in a case that the delay information is one piece of delay information, the delay information corresponds to a first piece of Doppler information in K2 pieces of Doppler information, or the delay information is delay information of a first delay path.

Optionally, the first piece of Doppler information in the K2 pieces of Doppler information is Doppler information corresponding to the first delay path.

Optionally, the parsing unit is specifically configured for: taking each group including $\lceil \log_2(ZY) \rceil$ bits in $K3 \times \lceil \log_2(ZY) \rceil$ bits in the CSI as one piece of Doppler information, wherein K3 is a positive integer greater than or equal to 1, Z is a quantity of delay paths in a Doppler group, and Y is a quantity of quantization steps for Doppler.

In the embodiments of the present disclosure, the first delay path is a delay path with a maximum delay or a maximum Doppler frequency offset.

The information transmission apparatus of the embodiments of the present disclosure sends the TRS resource configuration information and the TRS report configuration information to the terminal, the TRS resource configuration information includes configuration information of the TRS, the TRS report configuration information is used to indicate a report metrics in the channel state information CSI reported by the terminal, and the report metrics includes delay information and/or Doppler information; receives the CSI sent by the terminal, wherein the CSI is determined by the terminal according to the TRS measurement result and the TRS report configuration information, and the TRS measurement result is obtained by the terminal by receiving and measuring the TRS received according to the TRS resource configuration information, so as to match the channel measurement result of the base station side based on the CSI reported by the terminal which includes the delay information and/or Doppler information of the multipath small-scale channel, and assist the base station to perform channel prediction and precoding calculation at the future moment with the smaller overhead, thereby greatly optimizing the transmission performance in the medium-high speed scenario..

It should be noted that the division of the units in this embodiment of this application is schematic, is merely a logical function division, and may have another division manner in actual implementation. In addition, functional units in the embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a processor-readable storage medium. Based on such understanding, the technical solutions of the present disclosure essentially or all or part of the technical solutions may be embodied in the form of a software product, and the computer software product is stored in a storage medium, and includes several instructions for causing a computer device (which may be a personal computer, a server, or a network device) or a processor to perform all or part of the steps of the methods described in the embodiments of this application. The foregoing storage medium includes any medium that can store program code, such as a USB flash drive, a removable hard disk, a read-only memory (ROM), a random access memory (RAM), a magnetic disk, or an optical disk.

It should be noted that, the apparatus provided in the embodiments of the present disclosure can implement all method steps implemented in the foregoing method embodiments, and can achieve the same technical effect, and details of the same parts and beneficial effects as those in the method embodiments in this embodiment are not described herein again.

In some embodiments of the present disclosure, a processor-readable storage medium is further provided, wherein the processor-readable storage medium stores program instructions, and the program instructions are configured to cause the processor to perform the following steps:

sending tracking reference signal TRS resource configuration information and TRS report configuration information to a terminal, wherein the TRS resource configuration information includes configuration information of a TRS, the TRS report configuration information is used to indicate report metrics in channel state information (CSI) reported by the terminal, and the report metrics include delay information and/or Doppler information;
receiving CSI from the terminal, wherein the CSI is determined by the terminal according to a TRS measurement result and the TRS report configuration information, and the TRS measurement result is obtained by the terminal through receiving and measuring the TRS received according to the TRS resource configuration information.

When the program is executed by the processor, all implementations of the foregoing method embodiments applied to the network side device side shown in FIG. 2 can be implemented, and details are not described herein for avoiding repetition.

The technical solution provided in this embodiment of this application may be applied to a plurality of systems, in particular, a fifth generation mobile communication (5G) system. For example, the applicable system may be a Global System of Mobile Communication (GSM) system, a Code Division Multiple Access (CDMA) system, a Wideband Code Division Multiple Access (WCDMA) General Packet Radio Service (GPRS) system, a Long Term Evolution (LTE) system, a Long Term Evolution Advanced (LTE-A) system, a Universal Mobile Telecommunication System (UMTS), a Worldwide Interoperability for Microwave Access (WiMAX) system, a 5G new radio (NR) system, and the like. The plurality of systems each include a terminal device and a network device. The system may further include a core network part, for example, an Evolved Packet System (EPS), a 5G system (5 GS), or the like.

The terminal device in this embodiment of this application may be a device that provides voice and/or data connectivity to a user, a handheld device having a wireless connection function, or another processing device connected to a wireless modem. In different systems, the name of the terminal device may be different, for example, in a 5G system, the terminal device may be referred to as user equipment (UE). The wireless terminal device may communicate with one or more core networks (CN) via a radio access network (RAN), and the wireless terminal device may be a mobile terminal device, such as a mobile phone (or referred to as a "cellular" phone) and a computer having a mobile terminal device, for example, may be a portable, pocket-sized, handheld, computer built-in or vehicle-mounted mobile device, which exchanges language and/or data with a radio access network. For example, a Personal Communication Service (PCS) phone, a cordless telephone, a Session Initiated Protocol (SIP) phone, a Wireless Local Loop (WLL) station, a personal digital assistant (PDA), and the like. The wireless terminal device may also be referred to as a system, a subscriber unit, a subscriber station, a mobile station, a mobile station, a remote station, an access point, a remote terminal, an access terminal, a user terminal, a user agent, and a user device, which are not limited in the embodiments of this application.

The network side device in this embodiment of this application may be a base station, and the base station may include a plurality of cells that provide a service for the terminal. Depending on the specific application scenario, the base station may also be referred to as an access point, or may be a device in the access network that communicates with the wireless terminal device through one or more sectors on the air interface, or another name. The network side device may be configured to replace the received over-the-air frame with an Internet Protocol (IP) packet as a router between the wireless terminal device and the rest of the access network, wherein the rest of the access network may include an Internet Protocol (IP) communication network. The network side device may also coordinate attribute management of the air interface. For example, the network side device in this embodiment of this application may be a network side device (BTS) in a Global System for Mobile Communications (GSM) or a Code Division Multiple Access (Code Division Multiple Access, CDMA), or may be a 5G base station in a Long Term Evolution (LTE) system, a relay node, a home base station (Femto), a pico base station (Pico), or the like. In some network structures, the network side device may include a centralized unit (CU) node and a distributed unit (DU) node, and the centralized unit and the distribution unit may also be geographically separated.

The network-side device and the terminal device may each perform multi-input multi-output (MIMO) transmission by using one or more antennas, and the MIMO transmission may be single-user MIMO (SU-MIMO) or multi-user MIMO (MU-MIMO). The MIMO transmission may be two-dimensional MIMO (2-dimensional MIMO, 2D-MIMO), three-dimensional MIMO (3D-MIMO), full-dimension MIMO (FD-MIMO), or massive-MIMO (Massive-MIMO), or diversity transmission or precoding transmission or beamforming transmission, according to the form and quantity of the root antenna combination.

A person skilled in the art should understand that the embodiments of this application may be provided as a method, a system, or a computer program product. Therefore, this application may use a form of hardware only embodiments, software only embodiments, or embodiments with a combination of software and hardware. Moreover, this application may use a form of a computer program product implemented on one or more computer-usable storage media (including but not limited to a disk memory, an optical memory, and the like) including computer-usable program codes.

This application is described with reference to the flowcharts and/or block diagrams of the method, the device (system), and the computer program product according to the embodiments of this application. It should be understood that each process and/or block in the flowcharts and/or block diagrams and a combination of processes and/or blocks in the flowcharts and/or block diagrams may be implemented by computer-executable instructions. These computer-executable instructions may be provided to a processor of a general-purpose computer, a special-purpose computer, an embedded processor, or other programmable data processing devices to generate a machine, so that the instructions executed by the processor of the computer or other programmable data processing devices generate means for implementing the functions specified in one or more flows of the flowcharts and/or one or more blocks in the block diagrams.

These processor-executable instructions may also be stored in a processor-readable memory that can direct a computer or other programmable data processing device to function in a particular manner, such that the instructions stored in the processor-readable memory produce an article of manufacture including an instruction device that implements the functions specified in one or more flows of the flowchart and/or one or more blocks of the block diagram.

These processor-executable instructions may also be loaded onto a computer or other programmable data processing device such that a series of operational steps are performed on the computer or other programmable device to produce a computer-implemented process, such that the instructions executed on the computer or other programmable device provide steps for implementing the functions specified in one or more flows of the flowchart and/or one or more blocks of the block diagram.

It should be noted that it should be understood that the division of the foregoing modules is merely a division of logical functions, and may be completely or partially integrated into one physical entity during actual implementation, or may be physically separated. The modules may all be implemented in a form of software invoked by a processing element, or may all be implemented in a form of hardware; or some modules may be implemented in a form of invoking software by using a processing element, and some modules are implemented in a form of hardware. For example, a module may be a separately established processing element, or may be integrated in a chip of the foregoing apparatus, or may be stored in a memory of the apparatus in a form of program code, and a processing element of the foregoing apparatus invokes and executes the functions of the foregoing determining module. Implementation of other modules is similar. In addition, all or part of these modules may be integrated together, or may be implemented independently. The processing element described herein may be an integrated circuit having a signal processing capability. In an implementation process, steps of the foregoing method or the foregoing modules may be completed by using an integrated logic circuit of hardware in the processor element or an instruction in a form of software.

For example, each module, unit, subunit, or sub-module may be one or more integrated circuits configured to implement the above method, for example, one or more Application Specific Integrated Circuit (ASIC), or one or more microprocessors (DSP), or one or more field programmable gate arrays (FPGA). For another example, when the foregoing module is implemented in a form of scheduling program code by using a processing element, the processing element may be a general-purpose processor, for example, a central processing unit (Central Processing Unit, CPU), or another processor that can invoke the program code. For another example, these modules may be integrated together and implemented in a form of a system-on-a-chip (SOC).

In the specification and claims of the present disclosure, the terms "first", "second", and the like are intended to distinguish between similar objects, and are not necessarily used to describe a specific order or sequence. It should be understood that the data used in this way can be interchanged under appropriate circumstances, so that the embodiments of the present disclosure described herein, for example, are implemented in an order other than those illustrated or described herein. In addition, the terms "include" and "have" and any deformation thereof are intended to cover a non-exclusive inclusion, for example, a process, method, system, product, or device that includes a series of steps or units is not necessarily limited to those steps or units listed clearly, but may include other steps or units that are not clearly listed or inherent to these processes, methods, products, or devices. In addition, the specification and claims use "and/or" to refer to at least one of the connected objects, such as A and/or B and/or C, representing the presence of A, B alone, C alone, and both A and B, both B and C exist, both A and C exist, and A, B and C all exist. Similarly, use of "at least one of A and B" in this specification and claims should be understood as "A alone, B alone, or both A and B".

Obviously, a person skilled in the art can make various modifications and variations to this application without departing from the spirit and scope of this application. This application is intended to cover these modifications and variations provided that they fall within the scope of protection defined by the following claims and their equivalent technologies.

**Claims**

1. An information transmission method performed by a terminal, the method comprising:

   receiving tracking reference signal (TRS) resource configuration information and TRS report configuration information from a network side device;
   receiving and measuring a TRS to obtain a TRS measurement result, wherein the TRS is received based on the TRS resource configuration information;
   determining a correspondence between delay information and Doppler information according to the TRS measurement result and the TRS report configuration information; and
   sending channel state information (CSI) to the network side device according to the correspondence between the delay information and the Doppler information, wherein the CSI comprises the delay information and/or the Doppler information.

2. The method according to claim 1, wherein the CSI comprises $K1$ pieces of delay information and $K1$ pieces of Doppler information, wherein $K1$ is a positive integer greater than or equal to 1.

3. The method according to claim 2, wherein the $K1$ pieces of delay information and the $K1$ pieces of Doppler information are in one-to-one correspondence according to an index value of a delay path, the $K1$ pieces of delay information are delay information of K1 delay paths, and the K1 pieces of Doppler information are Doppler information of the K1 delay paths.

4. The method according to claim 1, wherein the CSI comprises one piece of delay information and K2 pieces of Doppler information; or

the CSI comprises K2 pieces of Doppler information; or
the CSI comprises K2-1 pieces of delay information and K2 pieces of Doppler information, wherein K2 is a positive integer greater than 1.

5. The method according to claim 4, wherein in a case that the CSI comprises one piece of delay information, the piece of delay information corresponds to first Doppler information.

6. The method according to claim 4, wherein the K2 pieces of Doppler information are Doppler information of K2 delay paths, and in a case that the CSI comprises the K2-1 pieces of delay information, the K2-1 pieces of delay information comprises K2-1 delay difference offset values relative to a first delay path of the K2 delay paths.

7. The method according to claim 1, wherein the CSI comprises K3 groups of Doppler information, and K3 is a positive integer greater than or equal to 1.

8. The method according to claim 7, wherein a value of K3 is configured by the network side device by using higher layer signaling or in a predefined manner; or
a value of K3 is determined by the TRS measurement result and a preset value A, wherein K3 is less than or equal to A, and a value of A is configured by the network side device by using higher layer signaling or a predefined manner.

9. The method according to claim 7, wherein each group of the K3 groups of Doppler information comprises one piece of delay information and Doppler frequency offset information of B1 delay paths; or

each group of the K3 groups of Doppler information comprises Doppler frequency offset information or Doppler difference offset values of B1 delay paths, and the CSI further comprises delay information of a first delay path in the B1 delay paths comprised in the each group; or
each group of the K3 groups of Doppler information comprises Doppler frequency offset information or Doppler difference offset values of B1 delay paths, and the CSI further comprises delay information of a first delay path in B1 delay paths comprised in a first group of the K3 groups of Doppler information and delay difference offset values of K3-1 groups of the K3 groups relative to a first delay path of the first group, and B1 is a positive integer greater than 1.

10. The method according to claim 7, wherein each group of the K3 groups of Doppler information comprises Doppler information of M delay paths, wherein M = X/K3, and X is a total quantity of Doppler information; or
each group of the K3 groups of Doppler information comprises Doppler information of N delay paths that meet a first condition, wherein a delay path that meets the first condition is a delay path that the absolute value of difference between a Doppler frequency offset of the delay path and a Doppler frequency offset of a first delay path in the group is less than or equal to a preset threshold.

11. The method according to any one of claims 1-10, wherein in a case that the CSI comprises Y pieces of Doppler information and Y is a positive integer greater than or equal to 1,

the Y pieces of Doppler information comprise Y Doppler values;
or, when Y is greater than 1, the Y pieces of Doppler information comprise a Doppler value of a first delay path and difference offset values of Y-1 delay paths relative to the first delay path;
when Y is equal to 1, the Doppler information is a Doppler value of a first delay path, a maximum Doppler value, or a weighted average value of Doppler values of Y delay paths.

12. The method according to claim 11, wherein when Y is greater than 1, Doppler values of Y delay paths are sorted in an order from large to small, or delay absolute values of the Y delay paths are sorted in an order from large to small.

13. The method according to claim 11, wherein the first delay path is a delay path with a maximum delay or maximum Doppler frequency offset.

**14.** An information transmission method performed by a network side device, wherein the method comprises:

sending tracking reference signal TRS resource configuration information and TRS report configuration information to a terminal, wherein the TRS resource configuration information comprises configuration information of a TRS, the TRS report configuration information is used to indicate report metrics in channel state information (CSI) reported by the terminal, and the report metrics comprise delay information and/or Doppler information; receiving CSI from the terminal, wherein the CSI is determined by the terminal according to a TRS measurement result and the TRS report configuration information, and the TRS measurement result is obtained by the terminal through receiving and measuring the TRS received according to the TRS resource configuration information.

**15.** The method according to claim 14, wherein sending the tracking reference signal TRS resource configuration information and the TRS report configuration information to the terminal comprises:
sending the TRS resource configuration information and the TRS report configuration information to the terminal through higher layer signaling.

**16.** The method according to claim 14, wherein the method further comprises:
parsing the CSI to obtain the delay information and/or the Doppler information.

**17.** The method according to claim 16, wherein parsing the CSI to obtain the delay information and/or the Doppler information comprises:

taking each group comprising $\lceil \log_2(X) \rceil$ bits in first $K1 \times \lceil \log_2(X) \rceil$ bits in the CSI as one piece of delay information;

taking each group comprising $\lceil \log_2(Y) \rceil$ bits in last $K1 \times \lceil \log_2(Y) \rceil$ bits in the CSI as one piece of Doppler information; wherein K1 is a positive integer greater than or equal to 1, X is a quantity of quantization steps for delay, and Y is a quantity of quantization steps for Doppler.

**18.** The method according to claim 17, wherein the delay information has a correspondence with the Doppler information.

**19.** The method according to claim 17, wherein first delay information is delay information of a first delay path.

**20.** The method according to claim 16, wherein parsing the CSI to obtain the delay information and/or the Doppler information comprises:

taking first $\lceil \log_2(X) \rceil$ bits in the CSI as one piece of delay information, and taking each group including $\cdot \lceil \log_2(Y) \rceil$ bits in last $K2 \times \lceil \log_2(Y) \rceil$ bits as one piece of Doppler information; or

taking each group comprising $\lceil \log_2(Y) \rceil$ bits in $K2 \times \lceil \log_2(Y) \rceil$ bits in the CSI as one piece of Doppler information; or

taking each group comprising $\lceil \log_2(X) \rceil$ bits in first $(K2-1) \times \lceil \log_2(X) \rceil$ bits in the CSI as one piece of delay information, and taking each group comprising $\lceil \log_2(Y) \rceil$ bits in last $K2 \times \lceil \log_2(Y) \rceil$ bits as one piece of Doppler information;
wherein K2 is a positive integer greater than 1, X is a quantity of quantization steps for delay, and Y is a quantity of quantization steps for Doppler.

**21.** The method according to claim 20, wherein in a case that the delay information is one piece of delay information, the delay information corresponds to a first piece of Doppler information in K2 pieces of Doppler information, or the delay information is delay information of a first delay path.

22. The method according to claim 20, wherein the first piece of Doppler information in the K2 pieces of Doppler information is Doppler information corresponding to the first delay path.

23. The method according to claim 16, wherein parsing the CSI to obtain the delay information and/or the Doppler information comprises:

taking each group comprising $\lceil \log_2 (ZY) \rceil$ bits in $K3 \times \lceil \log_2 (ZY) \rceil$ bits in the CSI as one piece of Doppler information, wherein K3 is a positive integer greater than or equal to 1, Z is a quantity of delay paths in a Doppler group, and Y is a quantity of quantization steps for Doppler.

24. The method according to claims 19, 21, or 22, wherein the first delay path is a delay path with a maximum delay or a maximum Doppler frequency offset.

25. A terminal, comprising: a memory, a transceiver, a processor,

wherein, the memory is configured to store program instructions; the transceiver is configured to send and receive data under the control of the processor; and the processor is configured to read the program instructions in the memory and perform the following operations:
receiving, through the transceiver, tracking reference signal (TRS) resource configuration information and TRS report configuration information from a network side device;
receiving and measuring a TRS to obtain a TRS measurement result, wherein the TRS is received based on the TRS resource configuration information;
determining, through the transceiver, a correspondence between delay information and Doppler information according to the TRS measurement result and the TRS report configuration information; and
sending channel state information (CSI) to the network side device according to the correspondence between the delay information and the Doppler information, wherein the CSI comprises the delay information and/or the Doppler information.

26. An information transmission apparatus, comprising:

a first receiving unit, configured to receive tracking reference signal (TRS) resource configuration information and TRS report configuration information from a network side device;
a measurement unit, configured to receive and measure a TRS to obtain a TRS measurement result, wherein the TRS is received based on the TRS resource configuration information; and
a first processing unit, configured to determine a correspondence between delay information and Doppler information according to the TRS measurement result and the TRS report configuration information; and
a first sending unit, configured to send channel state information (CSI) to the network side device according to the correspondence between the delay information and the Doppler information, wherein the CSI comprises the delay information and/or the Doppler information.

27. The apparatus according to claim 26, wherein the CSI comprises K1 pieces of delay information and K1 pieces of Doppler information, wherein K1 is a positive integer greater than or equal to 1.

28. The apparatus according to claim 27, wherein the K1 pieces of delay information and the K1 pieces of Doppler information are in one-to-one correspondence according to an index value of a delay path, the K1 pieces of delay information are delay information of K1 delay paths, and the K1 pieces of Doppler information are Doppler information of the K1 delay paths.

29. The apparatus according to claim 26, wherein the CSI comprises one piece of delay information and K2 pieces of Doppler information; or

the CSI comprises K2 pieces of Doppler information; or
the CSI comprises K2-1 pieces of delay information and K2 pieces of Doppler information, wherein K2 is a positive integer greater than 1.

30. The apparatus according to claim 29, wherein in a case that the CSI comprises one piece of delay information, the piece of delay information corresponds to first Doppler information.

31. The apparatus according to claim 29, wherein the K2 pieces of Doppler information are Doppler information of K2 delay paths, and in a case that the CSI comprises the K2-1 pieces of delay information, the K2-1 pieces of delay information comprises K2-1 delay difference offset values relative to a first delay path of the K2 delay paths.

32. The apparatus according to claim 26, wherein the CSI comprises K3 groups of Doppler information, and K3 is a positive integer greater than or equal to 1.

33. The apparatus according to claim 32, wherein a value of K3 is configured by the network side device by using higher layer signaling or in a predefined manner; or
a value of K3 is determined by the TRS measurement result and a preset value A, wherein K3 is less than or equal to A, and a value of A is configured by the network side device by using higher layer signaling or a predefined manner.

34. The apparatus according to claim 32, wherein each group of the K3 groups of Doppler information comprises one piece of delay information and Doppler frequency offset information of B1 delay paths; or

each group of the K3 groups of Doppler information comprises Doppler frequency offset information or Doppler difference offset values of B1 delay paths, and the CSI further comprises delay information of a first delay path in the B1 delay paths comprised in the each group; or
each group of the K3 groups of Doppler information comprises Doppler frequency offset information or Doppler difference offset values of B1 delay paths, and the CSI further comprises delay information of a first delay path in B1 delay paths comprised in a first group of the K3 groups of Doppler information and delay difference offset values of K3-1 groups of the K3 groups relative to a first delay path of the first group, and B1 is a positive integer greater than 1.

35. The apparatus according to claim 32, wherein each group of the K3 groups of Doppler information comprises Doppler information of M delay paths, wherein M = X/K3, and X is a total quantity of Doppler information; or
each group of the K3 groups of Doppler information comprises Doppler information of N delay paths that meet a first condition, wherein a delay path that meets the first condition is a delay path that the absolute value of difference between a Doppler frequency offset of the delay path and a Doppler frequency offset of a first delay path in the group is less than or equal to a preset threshold.

36. The apparatus according to any one of claims 26-35, wherein in a case that the CSI comprises Y pieces of Doppler information and Y is a positive integer greater than or equal to 1,

the Y pieces of Doppler information comprise Y Doppler values;
or, when Y is greater than 1, the Y pieces of Doppler information comprise a Doppler value of a first delay path and difference offset values of Y-1 delay paths relative to the first delay path;
when Y is equal to 1, the Doppler information is a Doppler value of a first delay path, a maximum Doppler value, or a weighted average value of Doppler values of Y delay paths.

37. The apparatus according to claim 36, wherein when Y is greater than 1, Doppler values of Y delay paths are sorted in an order from large to small, or delay absolute values of the Y delay paths are sorted in an order from large to small.

38. The apparatus according to claim 36, wherein the first delay path is a delay path with a maximum delay or maximum Doppler frequency offset.

39. A network-side device, comprising: a memory, a transceiver, a processor,
wherein the memory is configured to store program instructions; the transceiver is configured to send and receive data under the control of the processor; and the processor is configured to read the program instructions in the memory and perform the following operations:

sending, through the transceiver, tracking reference signal TRS resource configuration information and TRS report configuration information to a terminal, wherein the TRS resource configuration information comprises configuration information of a TRS, the TRS report configuration information is used to indicate report metrics in channel state information (CSI) reported by the terminal, and the report metrics comprise delay information and/or Doppler information;
receiving CSI from the terminal through the transceiver, wherein the CSI is determined by the terminal according to a TRS measurement result and the TRS report configuration information, and the TRS measurement result is obtained by the terminal through receiving and measuring the TRS received according to the TRS resource configuration information.

40. An information transmission apparatus, comprising:

a second sending unit, configured to send tracking reference signal TRS resource configuration information and TRS report configuration information to a terminal, wherein the TRS resource configuration information comprises configuration information of a TRS, the TRS report configuration information is used to indicate report metrics in channel state information (CSI) reported by the terminal, and the report metrics comprise delay information and/or Doppler information;
a second receiving unit, configured to receiving CSI from the terminal, wherein the CSI is determined by the terminal according to a TRS measurement result and the TRS report configuration information, and the TRS measurement result is obtained by the terminal through receiving and measuring the TRS received according to the TRS resource configuration information.

41. The apparatus according to claim 40, wherein sending the tracking reference signal TRS resource configuration information and the TRS report configuration information to the terminal comprises:
sending the TRS resource configuration information and the TRS report configuration information to the terminal through higher layer signaling.

42. The apparatus according to claim 40, wherein the apparatus is further configured for:
parsing the CSI to obtain the delay information and/or the Doppler information.

43. The apparatus according to claim 42, wherein parsing the CSI to obtain the delay information and/or the Doppler information comprises:

taking each group comprising $\left\lceil \log_2(X) \right\rceil$ bits in first $K1 \times \left\lceil \log_2(X) \right\rceil$ bits in the CSI as one piece of delay information;

taking each group comprising $\left\lceil \log_2(Y) \right\rceil$ bits in last $K1 \times \left\lceil \log_2(Y) \right\rceil$ bits in the CSI as one piece of Doppler information; wherein K1 is a positive integer greater than or equal to 1, X is a quantity of quantization steps for delay, and Y is a quantity of quantization steps for Doppler.

44. The apparatus according to claim 43, wherein the delay information has a correspondence with the Doppler information.

45. The apparatus according to claim 43, wherein first delay information is delay information of a first delay path.

46. The apparatus according to claim 42, wherein parsing the CSI to obtain the delay information and/or the Doppler information comprises:

taking first $\left\lceil \log_2(X) \right\rceil$ bits in the CSI as one piece of delay information, and taking each group including

$\cdot \left\lceil \log_2(Y) \right\rceil$ bits in last $K2 \times \left\lceil \log_2(Y) \right\rceil$ bits as one piece of Doppler information; or

taking each group comprising $\left\lceil \log_2(Y) \right\rceil$ bits in $K2 \times \left\lceil \log_2(Y) \right\rceil$ bits in the CSI as one piece of Doppler information; or

taking each group comprising $\lceil \log_2(X) \rceil$ bits in first $(K2-1) \times \lceil \log_2(X) \rceil$ bits in the CSI as one piece of delay information, and taking each group comprising $\lceil \log_2(Y) \rceil$ bits in last $K2 \times \lceil \log_2(Y) \rceil$ bits as one piece of Doppler information;

wherein K2 is a positive integer greater than 1, X is a quantity of quantization steps for delay, and Y is a quantity of quantization steps for Doppler.

47. The apparatus according to claim 46, wherein in a case that the delay information is one piece of delay information, the delay information corresponds to a first piece of Doppler information in K2 pieces of Doppler information, or the delay information is delay information of a first delay path.

48. The apparatus according to claim 46, wherein the first piece of Doppler information in the K2 pieces of Doppler information is Doppler information corresponding to the first delay path.

49. The apparatus according to claim 42, wherein parsing the CSI to obtain the delay information and/or the Doppler information comprises:

taking each group comprising $\lceil \log_2(ZY) \rceil$ bits in $K3 \times \lceil \log_2(ZY) \rceil$ bits in the CSI as one piece of Doppler information, wherein K3 is a positive integer greater than or equal to 1, Z is a quantity of delay paths in a Doppler group, and Y is a quantity of quantization steps for Doppler.

50. The apparatus according to claim 45, 47, or 48, wherein the first delay path is a delay path with a maximum delay or a maximum Doppler frequency offset.

51. A processor-readable storage medium, wherein the processor-readable storage medium stores a computer program, and the computer program is configured to cause a processor to perform the steps of the information transmission method according to any one of claims 1 to 13, or perform the steps of the information transmission method according to any one of claims 14 to 24.

Receiving tracking reference signal (TRS) resource configuration information and TRS report configuration information from a network side device ⟋ 101

Receiving and measuring a TRS to obtain a TRS measurement result, wherein the TRS is received based on the TRS resource configuration information ⟋ 102

Determining a correspondence between delay information and Doppler information according to the TRS measurement result and the TRS report configuration information ⟋ 103

Sending channel state information (CSI) to the network side device according to the correspondence between the delay information and the Doppler information, wherein the CSI comprises the delay information and/or the Doppler information ⟋ 104

**FIG. 1**

Sending tracking reference signal TRS resource configuration information and TRS report configuration information to a terminal, wherein the TRS resource configuration information comprises configuration information of a TRS, the TRS report configuration information is used to indicate report metrics in channel state information (CSI) reported by the terminal, and the report metrics comprise delay information and/or Doppler information ⟋ 201

Receiving CSI from the terminal, wherein the CSI is determined by the terminal according to a TRS measurement result and the TRS report configuration information, and the TRS measurement result is obtained by the terminal through receiving and measuring the TRS received according to the TRS resource configuration information ⟋ 202

**FIG. 2**

310

Processor

320

Memory

Bus interface

300

Transceiver

330

User
interface

**FIG. 3**

401

first receiving unit

402

measurement unit

403

first processing unit

404

first sending unit

**FIG. 4**

510

Processor

520

Memory

Bus interface

500

Transceiver

**FIG. 5**

601

Second sending unit

602

Second receiving unit

**FIG. 6**

## INTERNATIONAL SEARCH REPORT

| International application No. |
|---|
| **PCT/CN2023/112908** |

| A. | CLASSIFICATION OF SUBJECT MATTER |
|---|---|

H04W72/02(2009.01)i

According to International Patent Classification (IPC) or to both national classification and IPC

| B. | FIELDS SEARCHED |
|---|---|

Minimum documentation searched (classification system followed by classification symbols)

IPC: H04W

Documentation searched other than minimum documentation to the extent that such documents are included in the fields searched

Electronic data base consulted during the international search (name of data base and, where practicable, search terms used)

CNTXT, ENTXTC, DWPI, CNKI, IEEE, 3GPP: 跟踪参考信号, 多普勒, 时延, 信道状态信息, TRS, doppler, latency, CSI

| C. | DOCUMENTS CONSIDERED TO BE RELEVANT |
|---|---|

| Category* | Citation of document, with indication, where appropriate, of the relevant passages | Relevant to claim No. |
|---|---|---|
| X | WO 2021128751 A1 (HUAWEI TECHNOLOGIES CO., LTD.) 01 July 2021 (2021-07-01) description, page 10, line 40-page 12, line 14, and page 24, line 29-page 25, line 30 | 1-51 |
| A | CN 111835482 A (VIVO COMMUNICATION TECHNOLOGY CO., LTD.) 27 October 2020 (2020-10-27) entire document | 1-51 |
| A | CN 112997524 A (LG ELECTRONICS INC.) 18 June 2021 (2021-06-18) entire document | 1-51 |
| A | CN 110474745 A (VIVO COMMUNICATION TECHNOLOGY CO., LTD.) 19 November 2019 (2019-11-19) entire document | 1-51 |
| A | CN 111565453 A (CHINA MOBILE COMMUNICATIONS CORPORATION RESEARCH INSTITUTE et al.) 21 August 2020 (2020-08-21) entire document | 1-51 |
| A | ERICSSON. "R1-1718452, Details on QCL" *3GPP TSG-RAN WG1 #90bis*, 03 October 2017 (2017-10-03), entire document | 1-51 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **13 September 2023** | **19 October 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/112908**

| Patent document cited in search report | | | Publication date (day/month/year) | Patent family member(s) | | | Publication date (day/month/year) |
|---|---|---|---|---|---|---|---|
| WO | 2021128751 | A1 | 01 July 2021 | WO | 2021128026 | A1 | 01 July 2021 |
| | | | | CN | 114846868 | A | 02 August 2022 |
| CN | 111835482 | A | 27 October 2020 | WO | 2021023061 | A1 | 11 February 2021 |
| | | | | KR | 20220045170 | A | 12 April 2022 |
| | | | | US | 2022159479 | A1 | 19 May 2022 |
| | | | | EP | 4009720 | A1 | 08 June 2022 |
| | | | | IN | 202227011058 | A | 15 July 2022 |
| | | | | VN | 86549 | A | 25 May 2022 |
| CN | 112997524 | A | 18 June 2021 | EP | 3855793 | A1 | 28 July 2021 |
| | | | | US | 2021392668 | A1 | 16 December 2021 |
| | | | | WO | 2020096275 | A1 | 14 May 2020 |
| CN | 110474745 | A | 19 November 2019 | US | 2021058212 | A1 | 25 February 2021 |
| | | | | WO | 2019214663 | A1 | 14 November 2019 |
| | | | | BR | 112020023022 | A2 | 02 February 2021 |
| | | | | KR | 20210008067 | A | 20 January 2021 |
| | | | | AU | 2019267977 | A1 | 17 December 2020 |
| | | | | EP | 3793121 | A1 | 17 March 2021 |
| | | | | IN | 202027051730 | A | 29 January 2021 |
| | | | | JP | 2021520759 | A | 19 August 2021 |
| CN | 111565453 | A | 21 August 2020 | None | | | |

Form PCT/ISA/210 (patent family annex) (July 2022)

**REFERENCES CITED IN THE DESCRIPTION**

**Patent documents cited in the description**

- CN 202210971968